**Europäisches Patentamt**

**European Patent Office**

**Office européen des brevets**

(19)

(11) **EP 1 363 220 A2**

(12) **EUROPEAN PATENT APPLICATION**

(43) Date of publication:
**19.11.2003 Bulletin 2003/47**

(51) Int Cl.⁷: **G06F 17/60**

(21) Application number: **03009898.2**

(22) Date of filing: **16.05.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **17.05.2002 JP 2002143752**

(71) Applicant: **DAINIPPON INK AND CHEMICALS, INC.**
**Itabashi-ku Tokyo (JP)**

(72) Inventors:
• **Gotou, Hiroki**
  **Saitama-ken (JP)**
• **Tomita, Yoshiro**
  **Gumma-ken (JP)**
• **Uchimi, Hideki**
  **Gumma-ken (JP)**
• **Okauchi, Masaki**
  **Saitama-shi, Saitam-ken (JP)**
• **Nakagawa, Masaaki**
  **Tokyo (JP)**
• **Hatanaka, Mitsuo**
  **Takatsuki-shi, Osaka (JP)**
• **Shishikura, Masami**
  **Chuou-ku, Chiba-ken (JP)**
• **Nakamuro, Masao**
  **Takarazuka-shi, Hyogo-ken (JP)**
• **Yuasa, Yoshio**
  **Osaka-shi, Osaka (JP)**

(74) Representative:
**Banzer, Hans-Jörg, Dipl.-Ing. et al**
**Kraus & Weisert**
**Patent- und Rechtsanwälte**
**Thomas-Wimmer-Ring 15**
**80539 München (DE)**

(54) **Color designating server, color ordering system, color designating method, color ordering method and its program**

(57)    This color designating server (11) displays a screen for designating color on a user terminal capable of connecting to a network. This server (11) includes a database (102) that contains information on dyes and pigments required for determining matchable colors, a conditions specification processing section (104) that transmits a conditions specification screen to the user terminal which prompts specification of condition information required for determining the matchable colors, a color information extraction section (115) that extracts matchable color data within the range of the conditions specified with the condition information from database (102) based on the condition information specified with the conditions specification screen, and a color information transmission section (105) that transmits a color plate that indicates the extracted color data to the user terminal in the form of image data superposed on a prescribed background color.

Fig. 2

EP 1 363 220 A2

**Description**

BACKGROUND OF THE INVENTION

Field of the Invention

The present invention relates to a color designation server that displays a screen for designating color on a user terminal capable of connecting to a network, a color ordering system, a color designating method, a color ordering method and its program.

Background Art

In the past, in the case of manufacturing products with colored resin, an orderer specified a desired color with a color sample book or color sample cut out from a magazine and so forth, and an orderee produced a prototype of a resin colored with the same color as that color, and repeated the production of prototypes until a color was obtained that was acceptable to the orderer.

As described above, in the past, since the method for designating color by an orderer was not determined, and there were cases in which the color sample provided did not precisely match the color required by the orderer, there was the problem of the desired color of the orderer not being accurately conveyed.

In consideration of the above circumstances, an object of the present invention is to provide a color designating server, color ordering system, color designating method, color ordering method and its program that displays a screen for designating color to a user terminal capable of connecting to a network so that the desired color of a user (the above orderer) can be conveyed accurately.

SUMMARY OF THE INVENTION

According to the present invention, a color designating server as defined in claim 1, a color ordering system as defined in claim 7, a color designating method as defined in claim 11, and a program as defined in claim 15 are provided. The dependent claims define preferred or advantageous embodiments of the invention.

The color designating server of the present invention displays a screen for designating color on a user terminal capable of connecting to a network. This color designating server comprises: a matchable color information database containing information on dyes and pigments required for determining matchable colors, a conditions specification processing unit which transmits to the user terminal a conditions specification screen that prompts specification of condition information required for determining the matchable colors, a color information extraction unit which extracts matchable color data within the range of the conditions specified with condition information from the matchable color information tion database based on said condition information specified with the conditions specification screen, and a color information transmission unit which transmits a color plate that indicates the extracted color data to the user terminal in the form of image data superposed on a prescribed background color.

According to this-color designating server, as a result of receiving condition information for adding restrictions in terms of application and so forth based on information contained in a matchable color information database, information can be provided to a user with respect to matchable colors within the restrictions of the condition information. At this time, since the color plate is transmitted to the user terminal by displaying superposed on a prescribed background color, the light source color of a CRT or liquid crystal display is able to represent a sensory color that resembles surface color resulting from reflection of light in the manner of ordinary objects such as a resin actually produced, or transmitted color in which light is transmitted in the manner of a film or filter, thereby making it possible to obtain the effect of being able to make a color displayed on a display screen approximate the color matching desired by a user.

Here, according to psychophysical research on color perception, in the case of viewing surface colors or transmitted colors (to be referred to as object colors), by making the background color around a color plate of this color a specific color, a surface color mode results in which only the color plate section appears to be emitting light.

In addition, a surface color mode results by making the background color of a color plate displayed on a CRT or liquid crystal display to be a specific color, and in terms of human perception, is similar to a surface color mode in the case viewing surface colors or transmitted colors, making it possible to obtain a perception of color that approximates surface colors and transmitted colors.

Thus, according to the present invention, a user is able to carry out highly accurate color matching by reducing the difference between a matched color on a display screen and the color of a product for which dyes and pigments are actually mixed.

The color information extraction unit may extract a plurality of sample color data based on condition information from a user terminal, and the previously mentioned color information transmission unit may transmit a color plate of the same surface area (same vertical to horizontal ratio) as the plurality of sample color data to the user terminal by arranging within a display area of a prescribed background color at a prescribed interval.

According to research on various phenomena associated with color perception and various physiological phenomena, in the case of display a plurality of color plates adjacent to each other in the same display area, the color of a color plate within this same display area typically appears to be a color that approximates the color of the color plate adjacent to it (Color Research and Application, Volume 19, Number 1, February 1994, p. 23-26, and Science, Vol. 65, No. 7, p. 429-437).

In contrast, according to the present invention, in the case of displaying a plurality of color plates in the same display area, since they are displayed by maintaining a prescribed distance between them, the effect on the user's perception of the light source color by nearby color plates can be reduced, thereby enabling highly accurate color matching to be performed by reducing the difference between the matched color on the display and the product color for which dyes and pigments are actually mixed.

Here, the surface area of each color plate is formed to be 0.5% or more of the entire display screen, and the above prescribed distance (distance between color plates) is preferably 5% or more of the width of the color plates.

These values for surface area and distance were set by having a plurality of persons compare actual product color and color plates on a screen.

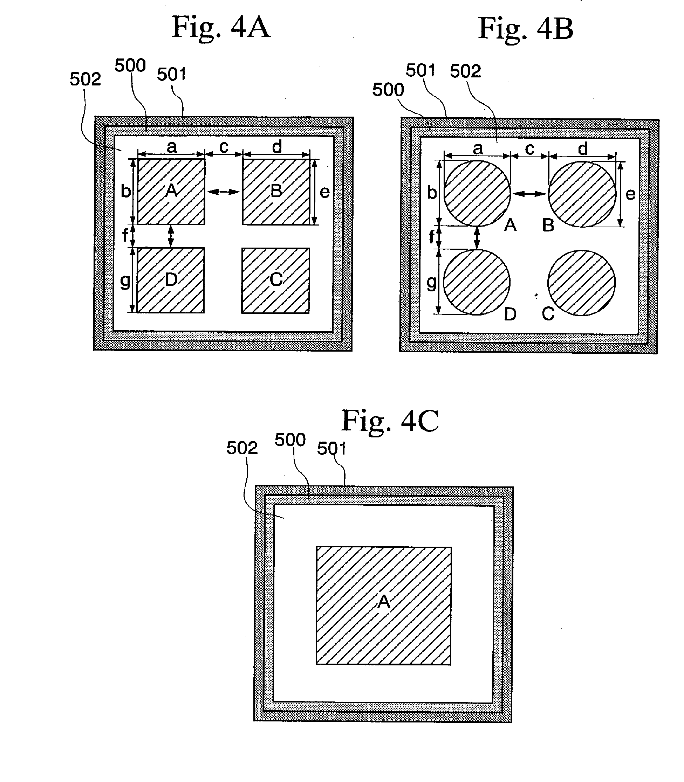

In actuality, by combining c and f in Figs. 4A and 4B such that:

$$c \geq (5/100) \cdot (a+d) \text{ or } c \geq (5/100) \cdot (a+b)$$

$$f \geq (5/100) \cdot (b+g) \text{ or } f \geq (5/100) \cdot (a+d)$$

then the upper limit is taken to be the distance at which the color plates do not protrude form the display area, and color plates are arranged according to this distance and surface area.

In addition, although a rectangular shape is employed for the shape of the color plate in the present embodiment, there are no particular restrictions on its shape, but rather a square, circle, oval or any other shape may be employed for the shape of the color plate provided it is of a constitution that satisfies the above conditions.

The color information transmission unit may select color data specified by a user in the form of specified color data from a plurality of sample color data based on a selection signal input from a user terminal, and may transmit a color plate of this specified color data to the user terminal by arranging in a display area of a prescribed background color.

In this case, the color plate of the selected specified color data can be displayed superposed on a prescribed background color, and color matching can be confirmed with the perception of the user (orderer) without being affected at all by the light source color of other color plates for independent confirmation. As was previously mentioned, since this results in a surface color mode, highly accurate color matching can be carried out by reducing the difference with a product color for which dyes and pigments are actually mixed.

Here, in the case of displaying a single color plate in the above display area, the surface area of the color plate is preferably 10-20% of the entire screen.

This value of surface area was set by having a plurality of persons compare an actual product color and the color of the color plate on the screen.

The prescribed background color may be achromatic color.

As was previously mentioned in the present invention, by making the background color of a color plate displayed on a CRT or liquid crystal display dark gray or other achromatic color of low color brightness in comparison with the color of color plate of a target stimulus, a surface color mode results due to enhancing the perception stimulus with respect to color perception, and in terms of human perception, this can be made to be similar to a surface color mode in the case of viewing a surface color or transmitted color, thereby allowing highly accurate color matching by obtaining the perception of a color that approximates surface color and transmitted color and reducing the difference between the color matched by a user on a display screen and a product color for which dyes and pigments are actually mixed.

This prescribed background color is preferably achromatic color, and preferably uses the following three types defined with three stimulus values (X, Y and Z) of an XYZ color designating system corresponding to the type of color that indicates a color plate.

As a concrete example of this, in the case the color temperature of the display is 6500 K, the standard background color is 20% gray:

$$(X, Y, Z) = (20.0, 21.1, 13.2),$$

the low color brightness background gray is 10% gray:

$$(X, Y, Z) = (10.6, 11.2, 12.0),$$

and
the high color brightness background gray is 70% gray:

$$(X, Y, Z) = (66.7, 70.4, 74.0).$$

However, grays of different color brightness other than the above three types may also be used as background as necessary, namely corresponding to the color of the color plate.

Similarly, standard background gray, low color brightness background gray, high color brightness background gray or a background gray of arbitrary color brightness is used for characters, logos or buttons and so forth described or provided in the display area to match the surrounding background color so as to have an effect on the color plate.

The values here were set by having a plurality of persons compare an actual product color and the color of a color plate on a screen.

The periphery of the display area may be surrounded by a white border of a prescribed width, and the periphery of this white border may be surrounded by a black border of a prescribed width.

According to research on various phenomena associated with color perception and various physiological phenomena, human vision is typically normalized with respect to color brightness by displaying a color with black and white within the same display area when viewing that color.

As a result, since achromatic color of a background color distinctly makes each color of color plates to be a stimulus color by using white and black borders, a user is able to perceive the color in a state that approximates the actual surface color and transmitted color of a product, thereby making it possible to accurately match colors for a color desired by the user by reducing the difference between a color matched on a display screen and a product color produced by actually mixing dyes and pigments.

A color matching information transmission unit may be provided that extracts color matching data of the dyes and pigments used for matching the specified color from a color matching database, and transmits that data to a user terminal.

As a result, since a user matches a required product color from dyes and pigments based on color matching data, a company that produces dyes and pigments, for example, is able to produce and stock only the minimum dyes and pigments required for color matching without having to produce small amounts of a large number of dyes and pigments as necessary, thereby making it possible to carry out efficient production of large amounts of a small number of dyes and pigments, and enabling production and stock costs to be reduced.

A color ordering system of the present invention comprises: a color designating server that displays a screen for designating color on a user terminal capable of connecting to a network; and an order receiving system that receives order information received by the color designating server from the user terminal; wherein, the color designating server comprises: a matchable color information database containing information on dyes and pigments required for determining matchable colors, a conditions specification processing unit which transmits to the user terminal a conditions specification screen that prompts specification of condition information required for determining the matchable colors, a color information extraction unit which extracts matchable color data within the range of the conditions specified with condition information from the matchable color information database based on said condition information specified with the conditions specification screen, and a color information transmission unit which transmits a color plate that indicates the extracted color data to the user terminal in the form of image data superposed on a prescribed background color; and, the order receiving system comprises: an order receiving unit that receives and processes orders for the user based on the received order information.

A color designating method of the present invention displays a screen for designating color on a user terminal capable of connecting to a network. This method comprises: a matchable color storage step in which information on dyes and pigments required for determining matchable colors is contained in a matchable color information database, a conditions specification step in which a conditions specification screen that prompts specification of condition information required for determining the matchable colors is transmitted to the user terminal, a color information extraction step in which matchable color data within the range of the conditions specified with the condition information is extracted from the matchable color information database based on condition information specified with the conditions specification screen, and a color information transmission step in which a color plate that indicates the extracted color data is transmitted to the user terminal in the form of image data superposed on a prescribed background color.

A program of the present invention allows color designation and processing that displays a screen for designating color on a user terminal capable of connecting to a network to be executed by a computer. This program comprises: matchable color storage processing which contains information on dyes and pigments required for determining matchable colors in a matchable color information database, conditions specification processing which transmits to the user terminal a conditions specification screen that prompts specification of condition information required for determining the matchable colors, color information extraction processing which extracts matchable color data within the range of the conditions specified with condition information from the matchable color information database based on said condition information specified with the conditions specification screen, and color information transmission processing which transmits a color plate that indicates the extracted color data to the user terminal in the form of image data superposed on a prescribed background color.

The program may be stored in a computer readable medium.

BRIEF DESCRIPTION OF THE DRAWINGS

Fig. 1 is a block diagram showing the general constitution of a color designating system realized by a color designating server according to one embodiment of the present invention, and an ordering system using that system.

Fig. 2 is a block diagram showing an example of the constitution of the color designating server 11 in Fig. 1.

Fig. 3 is a conceptual drawing showing an example of the constitution of database 102 in Fig. 2.

Figs. 4A to 4C are conceptual drawings explaining control of background color performed for the display area of color plate by color information transmission section 105 in Fig. 2.

Fig. 5 is a flow chart showing an example of the operation of color designating server 11 in Fig. 1.

Fig. 6 is a conceptual drawing showing a login screen displayed on a user terminal 13 by conditions specification processing section 104.

Fig. 7 is a conceptual drawing showing an example of the constitution of a color designation screen that selects a desired color from color plates on which a plurality of color plates are displayed in a display area having an achromatic background color.

Fig. 8 is a conceptual drawing showing an example of the constitution of a color designation screen that inputs color information in the form of condition information displayed on a user terminal 13 by a color designating server 11.

Fig. 9 is a conceptual drawing showing an example of the constitution of a color confirmation screen that confirms a selected desired color on which one selected color plate is displayed in a display area having an achromatic background color.

Fig. 10 is a conceptual drawing showing an example of the constitution of a list display screen that lists pooled color information selected by a user.

Fig. 11 is a conceptual drawing showing an example of the constitution of a virtual object selection screen that shows the virtual image of a product.

Fig. 12 is a drawing showing the general constitution of an order receiving system 14a in processing system group 14 of Fig. 1.

Fig. 13 is a sequence drawing showing an example of the operation of a color ordering system 10 as an embodiment of the present invention.

DESCRIPTION OF THE PREFERRED EMBODIMENTS

The following provides an explanation of the present invention through its embodiments. However, the following embodiments do not limit the invention described in the claims, and all combinations of characteristics explained in the embodiments are not necessarily required for the present invention to solve the problems of the prior art.

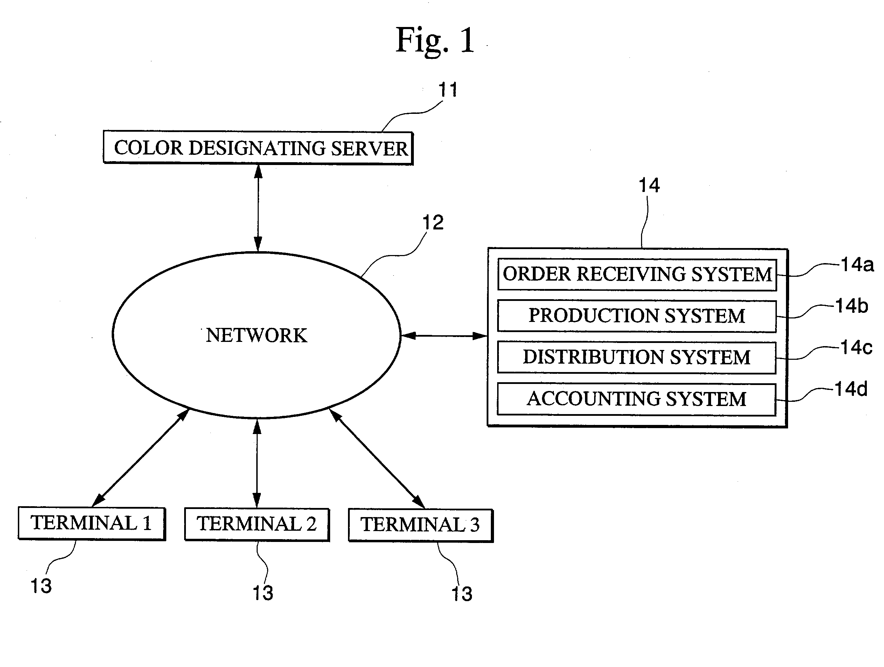

The following provides an explanation of embodiments of the present invention with reference to the drawings. Fig. 1 is a block diagram showing the constitution of an order receiving system using a color designating system realized by a color designating server according to one embodiment of the present invention.

In this drawing, a color designating server 11 provides a color designation service via a network 12. User terminals (terminal 1, terminal 2, terminal 3 and so forth) 13 are terminals capable of accessing color designating server via network 12. A processing system group 14 receives data via color designating server 11 and network 12, and performs processing of order reception information, production information, distribution information, accounting information and so forth. Here, network 12 is composed of a private telecommunication network, public telecommunication network or the Internet and so forth.

The following provides an explanation of an overview of the operation of the above color designating system and an ordering system that uses that system.

After the color designation of a resin is received from a user terminal 13, color designating server 11 presents inventory, delivery date and other information to user terminal 13 by communicating via distribution system 14c in processing system group 14 (order receiving system 14a, production system 14b, distribution system 14c and accounting system 14d) and network 12. In addition, it also presents the total cost to user terminal 13 by communicating via accounting system 14d in processing system group 14 and network 12. Next, in the case an order has been placed following confirmation of said cost and delivery date, color designating server 11 accepts an order for a resin product of the color specified in the above order by communicating via order receiving system 14a in processing system group 14 and network 12, and then places an order for production of the resin product contained in said order reception information to the production system in processing system group 14.

As a result of the above, a user can easily use a system extending from a color designating system for a resin in a resin product to an order placement system for producing a resin for said resin product. In addition, color designating server 11 is able to predict the delivery date and supply that information to a user by receiving inventory information from distribution system 14c. In addition, color designating server 11 is able to present an estimate that reflects the current prices of resin, dyes and pigments to a user by receiving information from accounting system 14d.

Next, the following provides an explanation of the details of the constitution and operation of color designating server 11 with reference to the drawings.

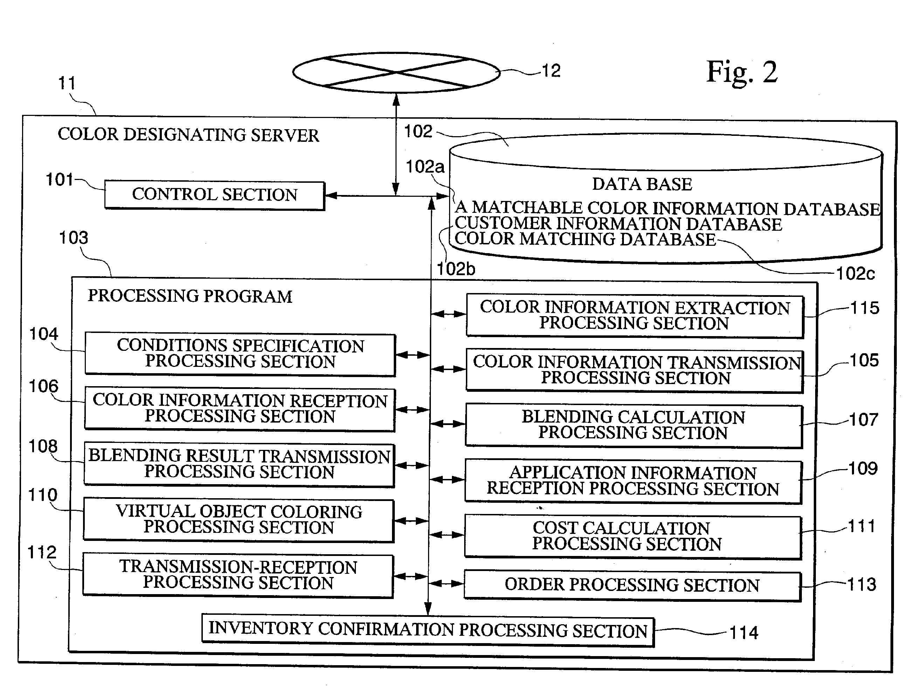

Fig. 2 is a block drawing showing the general constitution of color designating server 11 in one embodiment of the present invention. Control section 101 performs control of data within color designating server 11. Database 102 has matchable color information database 102a, which contains information required for determining matchable colors according to information such as the type of resin, types of dyes and pigments and ratios at which they are mixed, customer information database 102b, which contains user information including application information relating to articles of said user that are to be colored, and color matching database 102c, in which color matching data is stored that indicates the types of dyes and pigments to be mixed and their blended amounts (mixing ratios) for each matchable color corresponding to the type of resin. Processing program section 103 runs processing programs that perform each type of processing. The detailed constitution and operation of this processing program are described later.

Here, an explanation is provided of the constitution of database 102 by indicating an example.

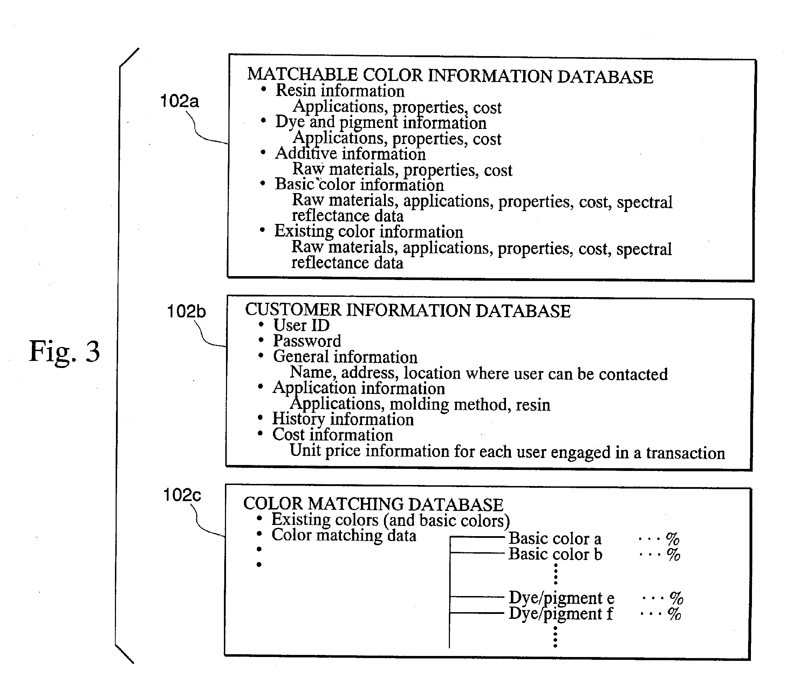

Fig. 3 is a drawing showing the constitution of database 102 in one embodiment of the present invention. First, an explanation is provided regarding the constitution of matchable color information database 102a using Fig. 3. The "resin information" in Fig. 3 refers to that in which applications, properties and cost information according to the type of resin is contained in the following items: Applications - shopping bags, automobile interior, automobile exterior, home appliance parts, electrical wire, miscellaneous goods; Properties - weather resistance, hygiene, formability, environmental problems, usage restrictions (including temperature restrictions); Cost - legal system costs, standard unit price, set price according to order size. Similar to the above, application, property and cost information are contained in various items for "dye and pigment information" and "additive information" as well. Furthermore, applications are not limited to those indicated above, but rather information is also preferably contained for various other products using resins, including pipes, flat yarn, marking film, paint and ink. In addition, this applies similarly to properties and cost.

In addition, "basic color information" refers to color information that serves as the basis in the case of realizing various colors by preparing colors serving as the basis of several tens of types of colors by blending resin, dyes and pigments and additives, and then combining those colors. More specifically, information is contained relating to raw materials, applications, properties, cost and spectral reflectance data. In addition, "existing color information" refers to information regarding colors that have been blended in the past. More specifically, information is contained relating to raw materials, applications, properties, cost and spectral reflectance data. Furthermore, raw materials refer to information relating to resins, dyes, pigments and additives, while spectral reflectance data refers to data based on the spectral reflectance factors of basic colors or existing colors. Furthermore, "basic color information" and "existing color information" contain "color sample information" for the colors of color samples, and consists of information relating to colors provided in the form of color samples.

Next, an explanation is provided of the constitution of customer information database 102b using Fig. 3. The "User ID" and "Password" in Fig. 3 refer to identifying information registered for identifying a user. "General information" refers to information such as the user's name (company name), address and location where the user can be contacted. "Application information" refers to information such as applications, molding methods and resins used determined by the industry type and so forth of each user. "History information" refers to information such as a record of resins ordered by a user in the past. "Cost information" refers to unit price information for individual products according to previous transactions and order size for each user engaged in a transaction.

Next, an explanation is provided of the constitution of color matching database 102c using Fig. 3. The "color matching data" in Fig. 3 refers to a table that indicates the relationship between the type of dye or pigment used for color matching (and there are also cases in which basic colors may be included) and the blended amount (indicated as a percentage of the whole) of this dye or pigment (and there are also cases in which basic colors may be included) for each matchable color indicated in color samples to be explained later, namely for each basic color or existing color.

Next, a detailed explanation is provided of the constitution of processing program section 103 returning to Fig. 2.

Conditions specification processing section 104 transmits a conditions specification screen to user terminal 13 that prompts specification of condition information such as application information, dye and pigment information, additive information and so forth required for determining matchable colors. Furthermore, in the case of having acquired application or other information in advance, conditions specification processing section 104 transmits a conditions specification screen that limits the types of resins, dyes and pigments based on said information to user terminal 13. Color information extraction processing section 115 extracts matchable colors corresponding to condition information specified with the conditions specification screen by referring to matchable color information database 102a for those matchable colors with the range of conditions defined with said condition information based on said condition information. Color information transmission section 105 generates image data superposed on a prescribed achromatic (e.g., gray) background color using matchable colors extracted by color information extraction section processing 115 as color slips of color samples, and displays that data after transmitting to user terminal 13.

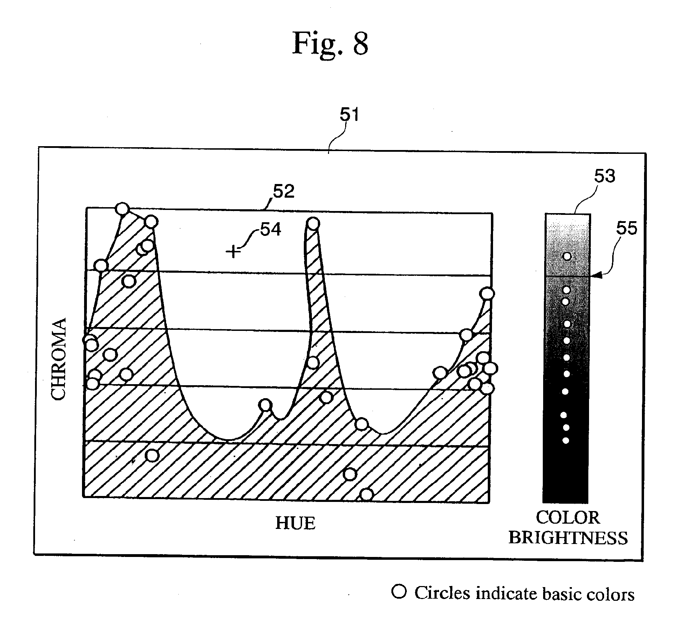

Furthermore, color information extraction processing section 115 extracts sample colors or existing colors within the range of the matchable color information from matchable color information database 102a based on that matchable color information. In addition, color information transmission section 105 transmits to user terminal 13 information for presenting this color gamut within a color space and displaying a color designation screen of colors that can be specified within said color gamut (conceptual drawing of color space of Fig. 8 to be described later). Moreover, color information extraction processing section 115 extracts corresponding matchable colors by searching for certain colors in the color gamut, which is the area of matchable colors according to each color of dye and pigment and basic colors, in matchable color information database 102a within the range of conditions defined by the condition information. Color information transmission section 105 then transmits the extraction results to user terminal 13. In addition, in the case a user selects a color from a color sample (plurality of color plates), color information extraction processing section 115 extracts matchable color samples within the range of conditions defined by condition information by referring to (searching) matchable color information database 102a, after which color information transmission section 105 transmits those results in the form of a plurality of color plates to user terminal 13 as previously described.

Color information reception processing section 106 receives color information relating to colors specified by a user from among a plurality of matchable color samples (specified color data) from user terminal 13. In the case colors corresponding to this color information are stored in color matching database 102c, blending calculation processing section 107 searches for and extracts color matching data corresponding to the color information, while in the case those colors are not stored in color matching database 102c, blending calculation processing section 107 calculates the blending ratios of resin, dye and pigment based on said received color information, and generates information on the results of this blending and uses that information as color matching data. Blending result transmission processing section 108 transmits the blending result information output by blending calculation processing section 107 to user terminal 13. Application information reception processing section 109 receives application information relating the article to be colored from user terminal 13. Virtual object coloring processing section 110 displays a virtual object matching the actual application either two-dimensionally or three-dimensionally on user terminal 13, colors said virtual object with the colors specified according to the matchable colors, and prompts confirmation of those colors by the user.

Cost calculation processing section 111 calculates cost based on the blending result information output by blending calculation processing section 107, or resin, dye and pigment information uniformly determined according to the extracted color matching data of the color matching database. Here, in the case of calculating cost in cost calculation processing section 111, blending result transmission processing section 108 and color information transmission processing section 105 transmit cost information calculated by cost calculation processing section 111, including color matching data, to user terminal 13.

In addition, in the case one or a plurality of colors have been specified from among the matchable colors in final user order processing in user terminal 13, and the type of product, including said specified color, has been specified, transmission-reception processing section 112 (reception unit, transmission unit) receives specified product information that identifies said specified color and said product from user terminal 13. In addition, transmission-reception processing section 112 transmits the judgment results judged in color designating server 11 to user terminal 13. In addition, order processing section 113 transmits order placement information for ordering a product corresponding to the received specified product information to order receiving system 14a. Inventory confirmation processing system 114 then acquires product inventory information corresponding to specified product information from distribution system 14c, and judges whether or not an order can be placed.

Furthermore, each of the processing sections of processing program section 103 indicated above may be realized with dedicated hardware, or each processing section may be composed by memory or CPU (central processing unit), and their functions may be realized by loading a program for realizing the functions of each processing section into memory followed by running that program.

In addition, the above memory is composed of non-volatile memory such as a hard disc drive, magnetooptical disc drive or flash memory, volatile memory such as a read-only recording medium such as CD-ROM or random access memory (RAM), or read/write recording medium read by a computer consisting of a combination thereof.

Next, an explanation is provided of another characteristic of the invention of the present application of superposing a sample plate of a color sample presented to a user by color information transmission section 105 on an achromatic (e.g., gray) background color, and displaying on a display screen of a user terminal 13.

In the case color matching is performed by a user from user terminal 13, as was mentioned in the above summary, the color perceived by a user varies even for the same color between the color of color plates viewed on a liquid crystal display or CRT (light source color) and a color that has actually been matched (surface color or transmitted color, to be referred to as object color). Consequently, a screen design is necessary that allows a user to perceive light source color with the same perception as object color.

Consequently, as shown in Fig. 4, color information transmission processing section 105 uses achromatic color for the background color of a display area for color plates and forms a border around a display area 502 on the display screen of user terminal 13. This border is formed in the form of a double border, with the inner border being white border 500 having a prescribed width (e.g., minimum width of 15 mm), and the outer border being black border 501 having a prescribed width (e.g., minimum width of 15 mm).

Figs. 4A and 4B indicate cases in which matchable colors within the range of conditions defined by condition information are displayed as a plurality of color plates (A,B,C,D) in the form of color gamuts based on said condition information, while Fig. 4C shows the case of displaying only one color plate selected from a plurality of color plates (for example, A). In Figs. 4A and 4B, the surface area of each color sheet is formed to be 0.5% or more of the entire display screen, and the previously mentioned prescribed interval (distance between color plates) is preferably formed to be 5% or more of the width of the color plates. In actuality, c and f are combined based on:

$$c \geq (5/100) \cdot (a+d) \text{ or } c \geq (5/100) \cdot (a+b)$$

$$f \geq (5/100) \cdot (b+g) \text{ or } f \geq (5/100) \cdot (a+d)$$

and the upper limit is taken to be the distance at which the color plates do not protrude form the display area, and a plurality of color plates are arranged according to this distance and surface area.

In addition, in Fig. 4C, white border 500 and black border 501 outside of it are arranged adjacent to the outer periphery of display area 502 by setting surface area s of display area 502 relative to surface area S of the entire display screen to be $0.2S \leq s \leq 0.8S$ (surface area s is 20% to 80% of surface area S, and preferably $0.35 \leq s \leq 0.7S$).

Moreover, the hue of display area 502 is gray, and as indicated in the means for solving the problems, as a concrete example, in the case the color temperature of the display is 6500 K, although 20% gray, or (X, Y,Z) = 20.0, 21.1, 13.2), is used for the gray of the standard background, 10% gray, or (X,Y,Z) = 10.6, 11.2, 12.0), is used for the gray of the low color brightness background, and 70% gray, or (X,Y,Z) = (66.7, 70.4, 74.0), is used for the gray of the high color brightness background, there are no restrictions on the above reflectance factors, and gray of any arbitrary color brightness may be prepared and used as necessary without limiting to the above three types.

In addition, as another concrete example, in the case the color temperature of the display is 6500 K, 100% gray, or (X,Y,Z) = (95.05, 100, 108.9), is used for white border 500, while 5% gray, or (X,Y,Z) = (4.3, 4.6, 5.1), is similarly used for black border 501.

The hue of characters, logos or buttons clicked with a mouse and so forth other than the color plates displayed in display area 502 is a monotone color similar to the background color, and gray is selected that has a reflectance factor value that can be distinguished from the surroundings between the above 5% gray and 100% gray.

The values of white border 500 and black border 501 are set to be values that yield the closest perceptions when a plurality of persons compare actual product color with color plates on a screen.

In the example indicated here, the color temperature of the display used to display the colors has a value of 6500 K, and the values of the three stimulus values (X,Y,Z) naturally differ if the display color temperature differs.

Next, an explanation is provided for setting the background gray relative to the color of color plates in display area 502.

In the case the color indicated by a color plate is outside the range of color reproduction of the display (e.g., CRT) (out of gamut, colors that cannot be reproduced on the display), the gray of the low color brightness background is used. Here, examples of colors outside the range of color reproduction include high chroma yellow, orange, green and blue.

In addition, even in the case the color of a color plate is within the range of color reproduction (color that can be reproduced on the display), gray of a low color brightness background is to be used for high chroma colors near a boundary. The following indicates threshold values for using gray of a low color brightness background. Chroma $C^*$ of the CIEL*C*h color designating system is used as an indicator of chroma.

Gray of a low color brightness background is generally used:

(1) if $C^* \geq 70$ in the CIEL*C*h color designating system in the case the color indicated by the color plate is high chroma yellow,
(2) if $C^* \geq 70$ in the CIEL*C*h color designating system in the case the color indicated by the color plate is high chroma orange,
(3) if $C^* \geq 40$ in the CIEL*C*h color designating system in the case the color indicated by the color plate is high chroma green, or
(4) if $C^* \geq 40$ in the CIEL*C*h color designating system in the case the color indicated by the color plate is high chroma blue.

In the case the color of the color plate is outside the range of color reproduction in this manner, by using low color brightness gray, the chroma of colors outside the range of color reproduction on the display is perceived by a user to have increased, thereby allowing a state in which it appears to be the same as a product color.

Next, an explanation is provided of the operation of color designating server 11.

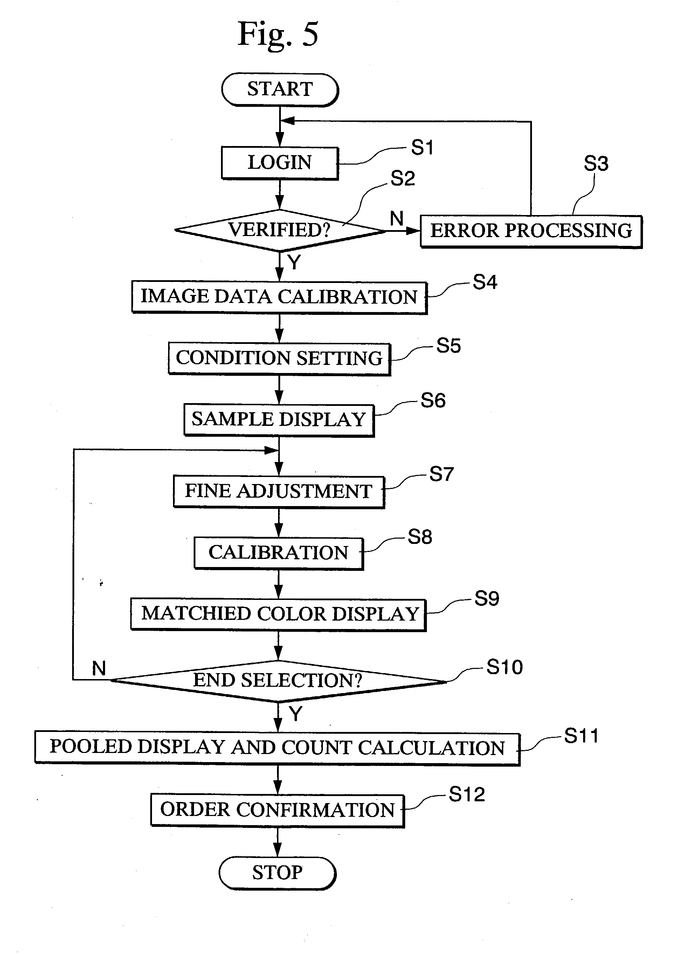

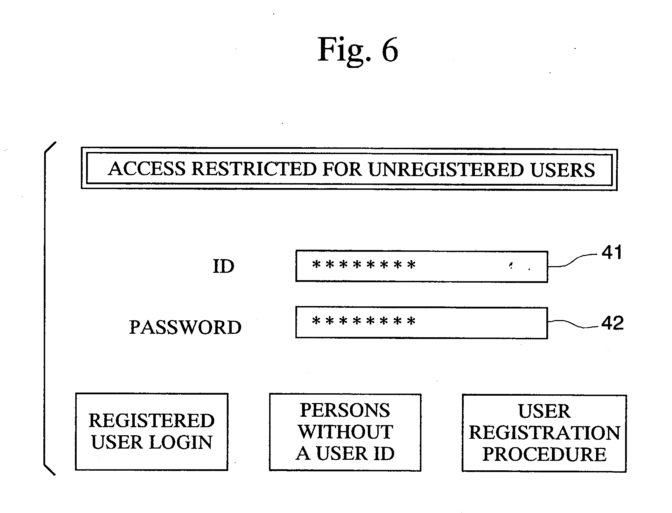

Fig. 5 is a flow chart indicating the operation of color designating server 11 in an embodiment of the present invention. In the case color designating server 11 has been accessed by user terminal 13, color designating server 11 displays the top page of a color matching system on user terminal 13 followed by user verification (Step S1). Here, in the case the user uses the color designating system, color designating server 11 displays the login screen shown in Fig. 6 on user terminal 13. Here, in the case a user ID has already been registered, the user's user ID is entered in user ID input field 41, and the user's password is entered in password input field 42. After having received that information, color designating server 11 performs user verification by confirming the user ID and password by referring to customer information database 102b (Step S2). Furthermore, colors can be specified with color designating server 11 even in the case of a user for whom a user ID is not registered. However, restrictions are added such as being unable to calculate cost and so forth.

Next, in the case either or both of the user ID and/or password input from user terminal 13 is incorrect, color designating server 11 detects that verification has failed, and transmits a message to user terminal 13 requesting that the user ID and password be reentered (Step S3).

On the other hand, when verification has been detected as being successful, color designating server 11 displays the colors of color plates transmitted to user terminal 13, and then displays instructions so as to adhere a color detection sensor (such as a spectrophotometer) to the detected area on the display screen followed by performing color calibration of the display image data to make the colors of the color plates the same as the colors of the color plates actually displayed on the display of user terminal 13 (Step S4). In this step S4, color designating server 11 sequentially displays prescribed colors in this detection area, calibrates the colors displayed on the color plates based on detection information output by the color detection sensor, and then extracts data that adjusts the images transmitted to user terminal 13.

Next, in order for the user to match colors, conditions specification processing section 104 and application information reception processing section 109 input the respective information in color designating server 11 by inputting desired condition information and application information on the purpose of use to user terminal 13 (Step S5). The method for designating colors in condition information may use various methods. Desired colors may be selected from a color sample book or in addition to matching colors freely with a mouse and so forth using the color space shown in Fig. 8, RGB color matching and so forth may also be used. Regardless of the color designation, color gamut threshold values are calculated for determining color gamut. Colors can also be specified based on data (such as RGB values) measured using by the user himself using a spectrophotometer (e.g, the color detection sensor described above).

The following provides an explanation of Fig. 8. Fig. 8 is a graph showing an example of a color designation screen that is displayed on user terminal 13 by the color designating server in one embodiment of the present invention. Color designation screen 51 contains color plane 52 that plots chroma on the vertical axis and hue on the horizontal axis, and color brightness specification field 53 that specifies the color brightness of said color plane. A color space is composed by this color plane 52 and color brightness specification field 53. The circles in color plane 52 indicate the locations of basic colors using resin, dye and pigment for a shopping bag. The diagonal lines in color plane 52 indicate the color gamut determined by comparing with matchable color information database 102a in the form of an area of matchable colors according to the basic colors within the range of the resin, dye and pigment for the shopping bag (calculation of color gamut threshold values).

In addition, when the user specifies the desired location of said color gamut by clicking with a mouse, cross mark 54 is added to color plane 52 to clearly indicate the color currently being specified in color plane 52. In addition, in the case of changing the color brightness of color plane 52, a gauge 55 in the color brightness specification field 53 is moved up and down. At this time, the color brightness of the brightness that exceeds the uppermost circle among the circles representing basic colors in color brightness specification field 53 is taken to be the area of colors that cannot be matched.

In addition, in Step S5, in the case desiring to set conditions such as the resin used by the user, conditions specification processing section 104 transmits the condition specification screen that limits the type of resin, dye and pigment for the shopping bag to user terminal 13. By then specifying conditions on said condition specification screen the user is able to enjoy the benefits of color matching service in consideration of various conditions.

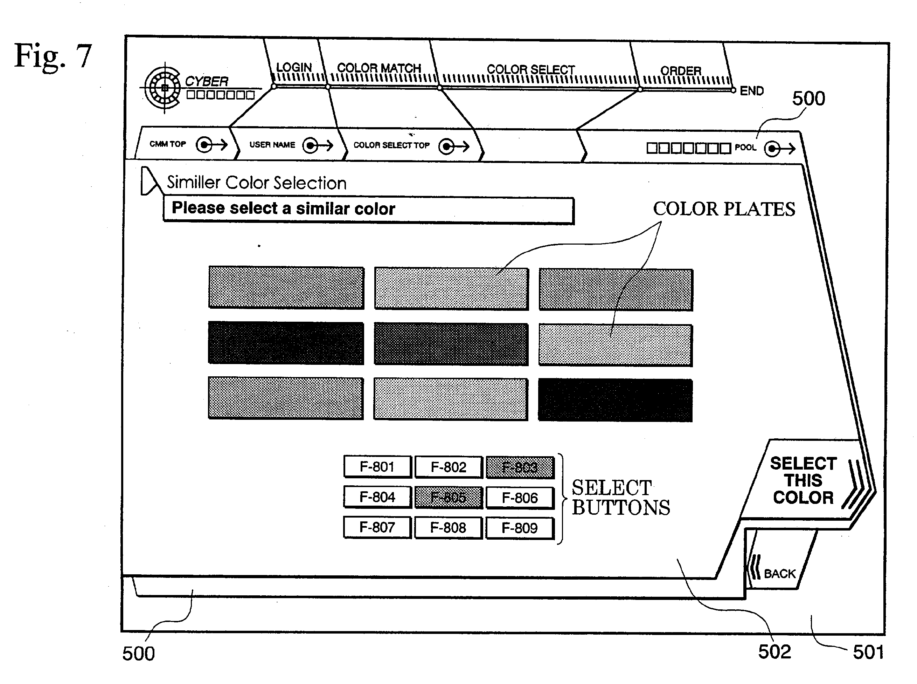

In addition, in the case, for example, the application of a user product is limited to a shopping bag in the application information of customer information database 102b, color information extraction processing section 115 searches through matchable color information database 102a, extracts color information in the color gamut that is the area of matchable colors by combining resin, dye and pigment for shopping bags, and as shown in Fig. 7 (corresponding to Fig. 4A or 4B), color information transmission processing section 105 displays color plates indicating the color specified by the user on user terminal 13 in the form of a color designation screen enabling designation of a plurality of colors, including color plates indicating colors in proximity to the prescribed color gamut in the display area of a gray background color (displays the data of a plurality of sample colors). The user is then required to select similar colors to the color requested by the user from among these color plates (Step S6).

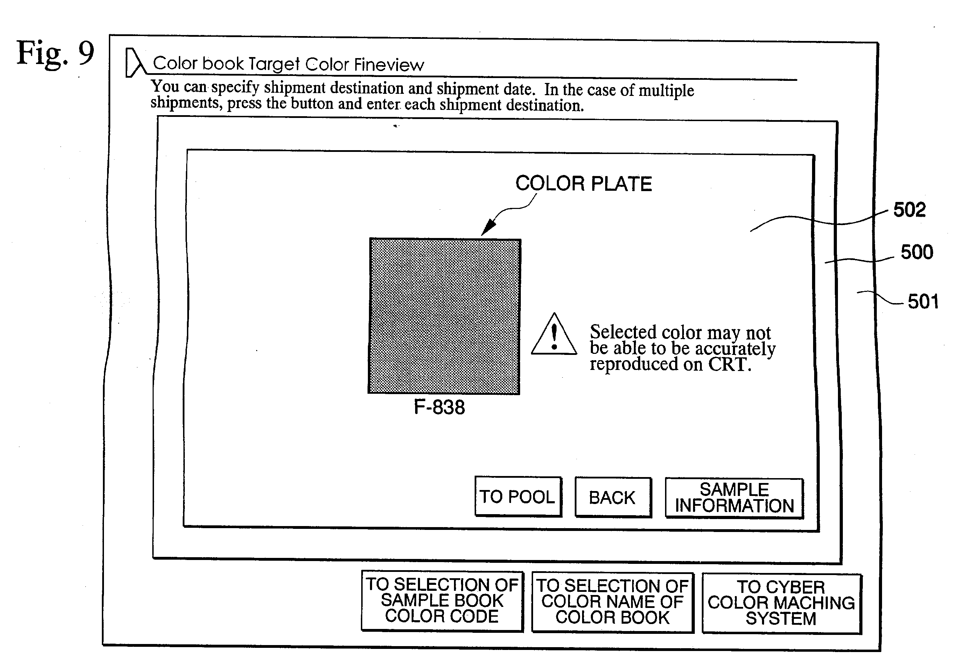

Next, as a result of the user selecting a color near the desired color from the color plates displayed in display area 502 on the display screen of user terminal 13 using a select button, color information reception processing section 106 inputs this selected color information (including condition information) (Step S7). At this time, the color designating server performs calibration using a color detection sensor so that the colors of the color plates displayed on the screen is the same as the colors of the color plates transmitted by the color designating server in the same manner as Step S4 (Step S8). Color information transmission processing section 105 then displays the color plate indicating the color selected by the user on the display of user terminal 13 as shown in Fig. 9 (corresponding to Fig. 4C) (Step S9).

Color designating server 101 then displays a selection screen on user terminal 13 for selecting whether or not other colors are to be selected, and in the case the user selects termination of selection on the selection screen, the processing moves to Step S11, while in the case the user has selected another color by clicking the button for selecting another color, processing returns to displaying the display screen of Fig. 7 in Step S7, and prompts the user to select another color (Step S10).

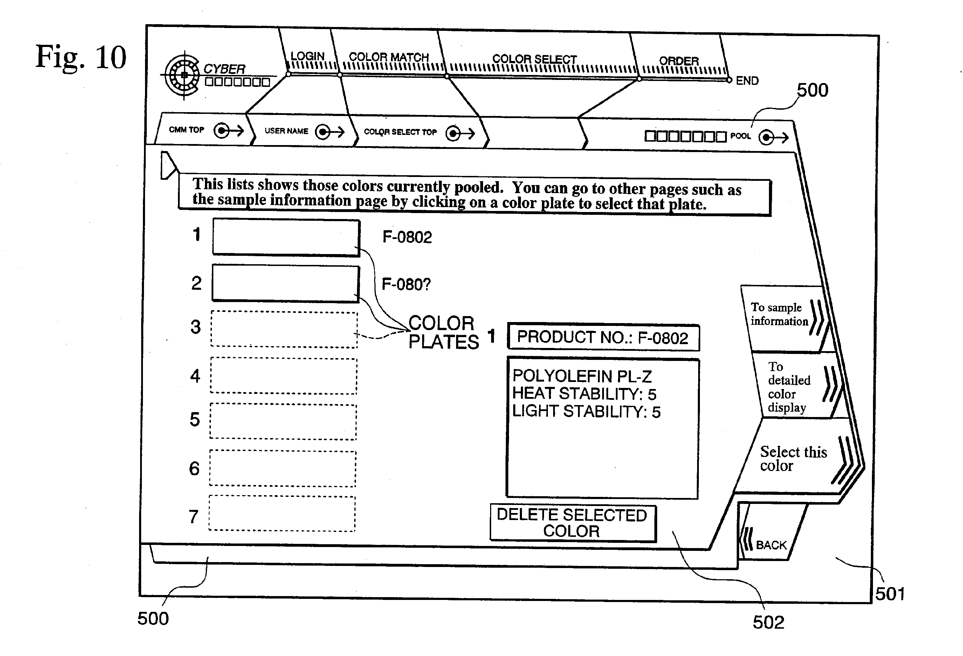

Next, color designating server 11 displays an accumulation of color plates selected by the user that are stored in internal memory in the form of a selected color information pool as shown in Fig. 10 (corresponding to Fig. 4A or 4B), and cost calculation processing section 111 outputs cost information for which cost has been calculated based on blending result information (Step S11). In this Step S11, blending result transmission processing section 108 transmits to user terminal 13 blending result screen information in which cost information output by cost calculation processing section 111 is included in the blending result information output by blending calculation processing section 107. As a result, blending result screens indicated for each piece of color information (indicating color plates) are displayed on user terminal 13 and the user is prompted to place an order (Step S12). When an order request is input from user terminal 13 and that order is finalized, transmission-reception processing section 112 receives the order request and performs order processing. Furthermore, blending calculation processing section 107 may also output blending result information by calculating the optimum blend based on basic color information compared by matchable color information database 102a. Color designating server 101 then confirms the order for the pooled color information as well as information on the destination and so forth to complete processing of the matching color application. In addition, the user terminates all color matching order processing by logging out from user terminal 13.

According to the constitution described above, in order to prevent the colors of color plates transmitted to user terminal 13 by color information transmission processing section 105 and colors displayed on the display screen of user terminal 13 by the transmitted color plates being perceived to be different colors even though the same colors are displayed, thereby making it no longer possible to perform highly accurate color matching, as a result of displaying the color plates by using gray for the color of display area 502 that displays the color plates, namely the background color when the color plates are displayed, the color designating server of the present invention is able to reduce the difference in the perception of light source color and surface color by the user and enable them to be perceived equally, thereby achieving the effect of enabling highly accurate color matching.

In addition, blending calculation processing section 107 searches for color matching data that indicates the types of dyes and pigments used to match the color (and may also include basic colors) and their blending ratios for the matchable color for which an order has been placed in color matching database 102c, and displays them on user terminal 13. In this case, color designating server 11 judges whether color matching data is to be provided for a charge or free of charge based on the transaction volume and so forth.

In this manner, by providing color matching data and then have actual color matching performed by the user by purchasing dyes, pigments and basic colors, dyes, pigments and coloring materials frequently used for color matching can be produced in large volume, thereby eliminating the production of small amounts of other types, which together with lowering production costs, makes it possible to reduce storage costs as well by being able to reduce storage space as a result of reducing the types produced.

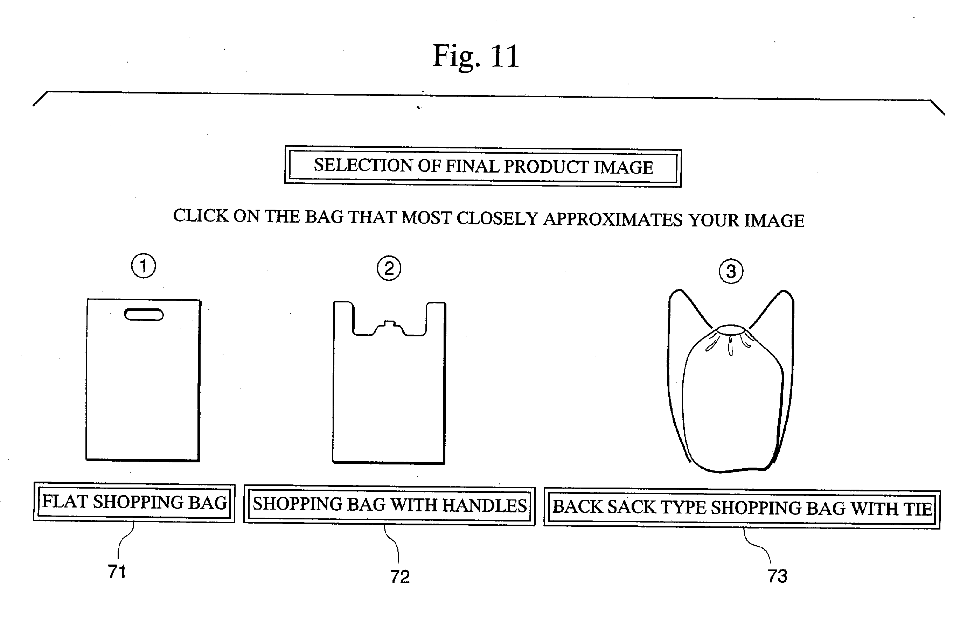

Moreover, in the case a user that has specified a shopping bag in the application information desires to confirm on the screen of user terminal 13 the finished product of coloring with the specified color in a form that closely approximates the actual product desired by the user (virtual two-dimensional or three-dimensional image), information requesting virtual coloring is transmitted from user terminal 13 to color designating server 11. As a result, virtual object coloring processing section 110 transmits the virtual object selection screen shown in Fig. 11 that is limited to a shopping bag to user terminal 13. The user then selects a product image that most closely approximates the actual desired product on said virtual object selection screen.

The following provides an explanation of Fig. 11. Fig. 11 is a drawing showing a virtual object selection screen that is displayed on user terminal 13 by the color designating server in one embodiment of the present invention. In Fig. 11, three types of shopping bags can be selected, consisting of a flat shopping bag, shopping bag with handles and back sack type shopping bag with tie. Reference symbols 71, 72 and 73 are select buttons that are clicked with a mouse when selecting one of the three types of shopping bags.

Here, a shopping bag with handles is assumed to have been selected by clicking select button 72 following completion of color selection and condition specification. Virtual object coloring processing section 110 transmits a selected color confirmation screen to user terminal 13 in which the selected virtual shopping bag is colored with the selected color. According to the above, the user is able to confirm the color with a product image that closely approximates the actual product on said selected color confirmation screen. In addition, in the case of displaying said virtual object, virtual object coloring processing section 110 prompts the user to select various virtual light sources and displays the differences in color resulting from the difference in the light source on user terminal 13. In addition, commercially available software may be used for two-dimensional or three-dimensional display of virtual objects. When this is done, selection of the degree of color transmission, the type and light source and other features provided with commercially available software can be used. In addition, although application information was specified using a user ID in the above embodiment, application information reception processing section 109 may also receive said application information by having application information transmitted by user terminal 13. Subsequently, the conditions specification screen information that restricts the resin, dye and pigment according to said received application information is then transmitted to user terminal 13.

Next, an explanation is provided of the internal constitution of processing system group 14 shown in the previously mentioned Fig. 1 along with operation correlated with the color designating server. Here, a system at least provided with the previously mentioned order receiving system and color designating server is used for the color ordering system, and the constitution and operation of one embodiment of said color ordering system are indicated below.

First, an explanation is provided of the general constitution of a color ordering system in one embodiment of the present invention with reference to the drawings. Fig. 1 is a drawing showing the general constitution of a color ordering system in one embodiment of the present invention. As shown in Fig. 1, color ordering system 10 is provided with a color designating server 11 and a processing system group 14 (composed of order receiving system 14a, production system 14b, distribution system 14c and accounting system 14d). In addition, communication between each system and between each system and color designating server 11 is possible by means of network 12. Furthermore, communication between each system is not limited to network 12, but rather communication may be performed by means of a dedicated line and so forth.

Next, since an explanation of the internal constitution of the above color designating server 11 has already been provided, the following provides an explanation of the internal constitution of order receiving system 14a in the above processing system 14 with reference to the drawings.

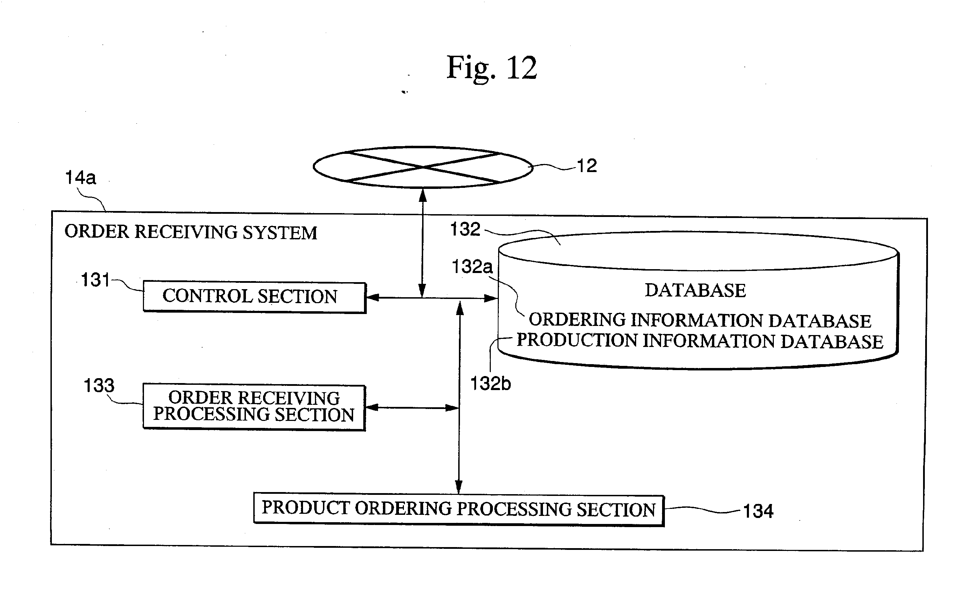

Fig. 12 is a block diagram showing an example of the internal constitution of order receiving system 14a in one embodiment of the present invention. In the drawing, control section 131 controls data within order receiving system 14a. Database 132 is provided with ordering information database 132a, which contains order reception information received and generated as a result of processing product ordering information received by color designating server 11, and product ordering information for placing an order for a product to production system 14b based on said order reception information, and production information database 132b, which contains production information such as types of products able to be produced with each production system 14b, allowable delivery dates and equipment operating status for one or a plurality of production systems 14b.

Order receiving processing section 133 performs order receiving processing based on product ordering information received from color designating server 11, and houses order reception information generated by said processing in ordering information database 132a. Product ordering processing section 134 processes order reception information from ordering information database 132a by generating product ordering information that instructs the production of a product to production system 14b by referring to the production information from production information database 132b. Furthermore, product ordering information generated by product ordering processing section 134 is housed in ordering information database 132a.

In addition, production system 14b receives product ordering information from order receiving system 14a and produces products based on said product ordering information. In addition, distribution system 14c manages inventory volume of a plurality of products. Moreover, distribution system 14c receives requests for inventory information via network 12, and returns inventory information relating to a specific product. In addition, accounting system 14d manages information relating to cost, such as product unit prices and material unit prices. Moreover, accounting system 14d receives requests for information on the current prices of materials used for a product specified with specified product information via network 12, and returns price information in response to said requests.

Next, an explanation is provided of the operation of the above color ordering system 10.

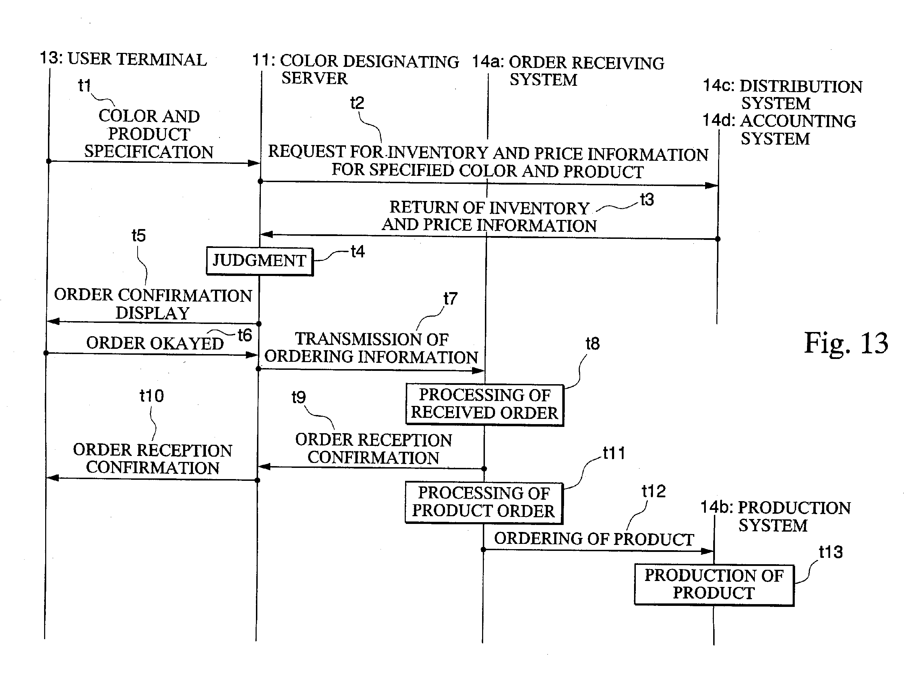

Fig. 13 is a sequence drawing showing the operation of color ordering system 10 as one embodiment of the present invention. Furthermore, the operation of color ordering system 10 shown in Fig. 13 includes the operation of order confirmation in Step S12 of the previously described color designating server 11 shown in the flow chart of Fig. 5.

First, in the case a color and a type of product of said color have been specified and ordered in user terminal 13, user terminal 13 transmits specified product information relating to the specified color and product to color designating server 11 (t1). This specified product information is received by transmission-reception processing section 112 of color designating server 11. Furthermore, as was previously described, those colors able to be specified with user terminal 13 are within a range indicated by color designating server 11. In addition, color information and product type information used as specified product information is preferably encoded prior to transmission.

Next, inventory confirmation processing section 114 of color designating server 11 requests inventory information relating to the specified color and specified type of product to distribution system 14c based on specified product information received by transmission-reception processing section 112. Moreover, cost calculation processing section 111 requests price information relating said product of said color to accounting system 14d (t2). As a result, distribution system 14c returns said product inventory information to color designating server 11. In addition, accounting system 14d returns price information on material prices and so forth used for said product (t3). Inventory confirmation processing section 114 of color designating server 11 judges whether a product order can be accepted based on the received inventory information (t4).

In the case the result of this judgment is that the order can be accepted, cost calculation processing section 111 calculates the product cost in reflection of the price. Next, color designating server 11 displays an order confirmation screen for presenting information required for order confirmation, including said calculation results, on user terminal 13 (t5). Here, after confirming with the order confirmation screen on user terminal 13, although not shown in the drawing, a user presses an "OK" button, for example, located on the order confirmation screen. As a result, information to the effect that the order has been okayed is transmitted by user terminal 13 to color designating server 11 (t6). Color designating server 11 then receives this and transmits ordering information to order receiving system 14a for ordering a product corresponding to the specified product information (t7).

As a result, order receiving system 14a receives the ordering information from color designating server 11. Next, order receiving processing section 133 performs order receiving processing based on the order reception information and houses order reception information generated by said processing in ordering information database 132a (t8). Next, order receiving system 14a transmits information for confirming order receiving, including that to the effect that the order has been accepted, to color designating server 11 (t9). Color designating server 11 then transmits information confirming order receiving received from order receiving system 14a to user terminal 13 (t10).

Next, product ordering processing section 134 of order receiving system 14a performs ordering processing (processing in which product ordering information is transmitted to production system 14b) on ordering information from ordering information database 132a at an arbitrary timing by referring to production information from production information database 132b and generating product ordering information that instructs product production to production system 14b (t11). As a result, order receiving system 14a orders the product for which production is instructed to production system 14b (t12). Next, production system 14b produces the product in accordance with the product ordering information (t13).

Furthermore, the arbitrary timing mentioned above refers to various times such as when product ordering information has been generated or when the ordered quantity of the same product has exceeded a threshold value. In addition, although products are ordered in the above embodiment based on the premise of production system 14b being located externally, production instructions to an in-house production system 14 are also included.

In addition, in the embodiment of the present invention described above, the procedure that is executed during operation of the color designating server and system is recorded in the form of a program on a computer-readable recording medium, and a user attribute registration information automatic renewal device is realized by loading the program recorded on this recording medium into a computer system and running that program. The computer system referred to here includes an OS and hardware such as peripheral equipment.

Moreover, the "computer system" includes an environment that provides (or displays) a web site in the case of using a WWW system.

In addition, the "computer-readable recording medium" refers to a portable medium such as a flexible disc, magnetooptical disc, ROM or CD-ROM, as well as a recording device such as a hard disc contained within the computer system. Moreover, the "computer-readable recording medium" includes that which retains a program for a fixed amount of time in the manner of volatile memory (RAM) within a system in the case of the program being transmitted over a network such as the Internet or a communication line such as a telephone line, or within a computer system serving as a client.

In addition, the above program may be transferred from the computer system in which the program is stored in a storage device and so forth to another computer system via a transfer medium or by a transfer wave within a transfer medium. Here, the "transfer medium" that transfers the program refers to a medium having a function that transfers information in the manner of a network such as the Internet (communication network) or a line (communication line) such as a telephone line.

In addition, the above program may also realize a portion of the above functions. Moreover, it may be a so-called differential file (differential program) that can be realized in combination with a program in which the above functions have been previously recorded in a computer system.

Although the above has provided a detailed description of one embodiment of the present invention with reference to the drawings, concrete constitutions are not limited to this embodiment, but rather design changes and so forth are included within the scope of the present invention provided they do not deviate from the gist thereof.

According to the present invention as explained above, as a result of receiving condition information for adding restrictions to applications and so forth based on information contained in a database, information regarding matchable colors can be provided to a user within the restrictions of the condition information, and at this time, by transmitting and displaying the above color plates to a user terminal superposed on a prescribed background color (achromatic color such as gray), the effect is obtained that enables the light source color of a CRT or liquid crystal display and so forth to express a color that is perceived to approximate surface color produced by reflection of light in the manner of an ordinary object such as resin that is actually produced or transmitted color in which light is transmitted in the manner of a film or filter, thereby allowing the color displayed on a display screen to approximate a desired matched color of the user.

**Claims**

1. A color designating server that displays a screen for designating color on a user terminal capable of connecting to a network, comprising:

   a matchable color information database (102a) containing information on dyes and pigments required for determining matchable colors,
   a conditions specification processing unit (104) which transmits to the user terminal (13) a conditions specification screen that prompts specification of condition information required for determining the matchable colors,
   a color information extraction unit (115) which extracts matchable color data within the range of the conditions specified with condition information from the matchable color information database (102a) based on said condition information specified with the conditions specification screen, and
   a color information transmission unit (105) which transmits a color plate that indicates the extracted color data to the user terminal (13) in the form of image data superposed on a prescribed background color.

2. The color designating server according to claim 1, wherein the color information extraction unit (115) extracts a plurality of sample color data based on condition information from the user terminal (13), and the color information transmission unit (105) transmits the plurality of sample color data to the user terminal (13) by arranging within a display area of the prescribed background color at prescribed intervals.

3. The color designating server according to claim 1 or 2, wherein the color information transmission unit (105) selects color data specified by a user in the form of specified color data from a plurality of sample color data based on a selection signal input from the user terminal (13) and transmits said color data to the user terminal (13) by arranging within a display area of the prescribed background color.

4. The color designating server according to any one of claims 2-3, wherein the range of the display area (502) is surrounded by a white border (500) of a prescribed width, and the periphery of this white border is surrounded by a black border (501) of a prescribed width.

5. The color designating server according to any one of claims 1-4, wherein the prescribed background color is achromatic color.

6. The color designating server according to any one of claims 1-5, further comprising a color matching information transmission unit that extracts color matching data of the dyes and pigments used for matching the specified color from a color matching database (102c), and transmits that data to the user terminal (13).

7. A color ordering system comprising:

   a color designating server (11) that displays a screen for designating color on a user terminal (13) capable of connecting to a network (12); and
   an order receiving system (14a) that receives order information received by the color designating server (11) from the user terminal (13); wherein,
   the color designating server (11) comprises:

      a matchable color information database (102a) containing information on dyes and pigments required for determining matchable colors,
      a conditions specification processing unit (104) which transmits to the user terminal (13) a conditions specification screen that prompts specification of condition information required for determining the matchable colors,
      a color information extraction unit (115) which extracts matchable color data within the range of the conditions specified with condition information from the matchable color information database (102a) based on said condition information specified with the conditions specification screen, and a color information transmission unit (105) which transmits a color plate that indicates the extracted color data to the user terminal (13) in the form of image data superposed on a prescribed background color; and, the order receiving system (14a) comprises:

an order receiving unit (133) that receives and processes orders for the user based on the received order information.

8. The color ordering system according to claim 7, wherein the color information extraction unit (115) extracts a plurality of sample color data based on condition information from the user terminal (13), and the color information transmission unit (105) transmits the plurality of sample color data to the user terminal (13) by arranging within a display area of the prescribed background color at prescribed intervals.

9. The color ordering system according to claim 7 or 8, wherein the color information transmission unit (105) selects color data specified by a user in the form of specified color data from a plurality of sample color data based on a selection signal input from the user terminal (13), and transmits said color data to the user terminal (13) by arranging within a display area of a prescribed background color.

10. The color ordering system according to any one of claims 7-9, further comprising a color matching information transmission unit that extracts color matching data of the dyes and pigments used for matching the specified color from a color matching database (102c), and transmits that data to the user terminal (13).

11. A color designating method of displaying a screen for designating color on a user terminal capable of connecting to a network, comprising:

a matchable color storage step in which information on dyes and pigments required for determining matchable colors is contained in a matchable color information database (102a), a conditions specification step (104) in which a conditions specification screen that prompts specification of condition information required for determining the matchable colors is transmitted to the user terminal (13), a color information extraction step (115) in which matchable color data within the range of the conditions specified with the condition information is extracted from the matchable color information database (102a) based on condition information specified with the conditions specification screen, and a color information transmission step (105) in which a color plate that indicates he extracted color data is transmitted to the user terminal (13) in the form of image data superposed on a prescribed background color.

12. The color designating method according to claim 11, wherein the color information extraction step comprises a step of extracting a plurality of sample color data based on condition information from the user terminal (13), and the color information transmission step comprises a step of transmitting this plurality of sample color data to the user terminal (13) by arranging within a display area of the prescribed background color at prescribed intervals.

13. The color designating method according to claim 11 or 12, wherein the color information transmission step comprises a step of selecting color data specified by a user in the form of specified color data from a plurality of sample color data based on a selection signal input from the user terminal (13), and transmits said color data to the user terminal (13) by arranging within a display area of the prescribed background color.

14. The color designating method according to any one of claims 11-13, further comprising a color matching information transmission step that extracts color matching data of the dyes and pigments used for matching the specified color from the matchable color information database (102a), and transmits that data to the user terminal.

15. A program that allows color designation and processing that displays a screen for designating color on a user terminal capable of connecting to a network to be executed by a computer, comprising:

matchable color storage processing which contains information on dyes and pigments required for determining matchable colors in a matchable color information database (102a), conditions specification processing (104) which transmits to the user terminal (13) a conditions specification screen that prompts specification of condition information required for determining the matchable colors, color information extraction processing (115) which extracts matchable color data within the range of the conditions specified with condition information from the matchable color information database (102a) based on said condition information specified with the conditions specification screen, and

color information transmission processing (105) which transmits a color plate that indicates the extracted color data to the user terminal (13) in the form of image data superposed on a prescribed background color.

16. A computer readable medium storing the program according to claim 15.

# Fig. 1

COLOR DESIGNATING SERVER — 11

NETWORK — 12

14

| ORDER RECEIVING SYSTEM | 14a |
| PRODUCTION SYSTEM | 14b |
| DISTRIBUTION SYSTEM | 14c |
| ACCOUNTING SYSTEM | 14d |

TERMINAL 1 — 13

TERMINAL 2 — 13

TERMINAL 3 — 13

EP 1 363 220 A2

EP 1 363 220 A2

Fig. 2

COLOR DESIGNATING SERVER — 11

12

101 — CONTROL SECTION

102

102a

DATA BASE

A MATCHABLE COLOR INFORMATION DATABASE
CUSTOMER INFORMATION DATABASE
COLOR MATCHING DATABASE — 102c

102b

103 — PROCESSING PROGRAM

| | |
|---|---|
| | COLOR INFORMATION EXTRACTION PROCESSING SECTION — 115 |
| 104 — CONDITIONS SPECIFICATION PROCESSING SECTION | COLOR INFORMATION TRANSMISSION PROCESSING SECTION — 105 |
| 106 — COLOR INFORMATION RECEPTION PROCESSING SECTION | BLENDING CALCULATION PROCESSING SECTION — 107 |
| 108 — BLENDING RESULT TRANSMISSION PROCESSING SECTION | APPLICATION INFORMATION RECEPTION PROCESSING SECTION — 109 |
| 110 — VIRTUAL OBJECT COLORING PROCESSING SECTION | COST CALCULATION PROCESSING SECTION — 111 |
| 112 — TRANSMISSION-RECEPTION PROCESSING SECTION | ORDER PROCESSING SECTION — 113 |

INVENTORY CONFIRMATION PROCESSING SECTION — 114

17

EP 1 363 220 A2

Fig. 3

102a

MATCHABLE COLOR INFORMATION DATABASE
* Resin information
    Applications, properties, cost
* Dye and pigment information
    Applications, properties, cost
* Additive information
    Raw materials, properties, cost
* Basic color information
    Raw materials, applications, properties, cost, spectral
    reflectance data
* Existing color information
    Raw materials, applications, properties, cost, spectral
    reflectance data

102b

CUSTOMER INFORMATION DATABASE
* User ID
* Password
* General information
    Name, address, location where user can be contacted
* Application information
    Applications, molding method, resin
* History information
* Cost information
    Unit price information for each user engaged in a transaction

102c

COLOR MATCHING DATABASE
* Existing colors (and basic colors)
* Color matching data

Basic color a      · · · %
Basic color b      · · · %

Dye/pigment e      · · · %
Dye/pigment f      · · · %

# Fig. 4A

# Fig. 4B

# Fig. 4C

# Fig. 5

```
           ┌─────────────┐
           │    START    │
           └─────────────┘
                  │
                  ▼
           ┌─────────────┐
           │    LOGIN     │────── S1
           └─────────────┘
                  │                              S3
                  ▼                               │
              ╱───────╲      N    ┌──────────────────────┐
             ╱ VERIFIED?╲─────────│  ERROR PROCESSING    │
             ╲         ╱          └──────────────────────┘
              ╲───────╱  S2
                  │ Y
                  ▼
     ┌──────────────────────────┐
     │  IMAGE DATA CALIBRATION  │────── S4
     └──────────────────────────┘
                  │
                  ▼
        ┌──────────────────────┐
        │   CONDITION SETTING  │────── S5
        └──────────────────────┘
                  │
                  ▼
         ┌─────────────────┐
         │  SAMPLE DISPLAY │────── S6
         └─────────────────┘
                  │
                  ▼
         ┌─────────────────┐
         │  FINE ADJUSTMENT│────── S7
         └─────────────────┘
                  │
                  ▼
          ┌───────────────┐
          │  CALIBRATION  │────── S8
          └───────────────┘
                  │
                  ▼
      ┌────────────────────────┐
      │  MATCHIED COLOR DISPLAY│────── S9
      └────────────────────────┘
                  │
                  ▼
   N      ╱───────────────────╲
   ───────╲  END SELECTION?   ╱────── S10
          ╲                 ╱
           ╲───────────────╱
                  │ Y
                  ▼
  ┌───────────────────────────────────────────┐
  │  POOLED DISPLAY AND COUNT CALCULATION      │────── S11
  └───────────────────────────────────────────┘
                  │
                  ▼
        ┌──────────────────────┐
        │  ORDER CONFIRMATION  │────── S12
        └──────────────────────┘
                  │
                  ▼
           ┌─────────────┐
           │    STOP     │
           └─────────────┘
```

# Fig. 6

ACCESS RESTRICTED FOR UNREGISTERED USERS

ID     ＊ ＊ ＊ ＊ ＊ ＊ ＊ ＊    41

PASSWORD     ＊ ＊ ＊ ＊ ＊ ＊ ＊ ＊    42

| REGISTERED USER LOGIN | PERSONS WITHOUT A USER ID | USER REGISTRATION PROCEDURE |

# Fig. 7

LOGIN  COLOR MATCH  COLOR SELECT  ORDER

CYBER

END

500

CMM TOP ⊙→  USER NAME ⊙→  COLOR SELECT TOP ⊙→  □□□□□□ POOL ⊙→

Similler Color Selection

**Please select a similar color**

COLOR PLATES

| F-801 | F-802 | F-803 |
| F-804 | F-805 | F-806 |
| F-807 | F-808 | F-809 |

SELECT BUTTONS

SELECT THIS COLOR

BACK

500                    502   501

EP 1 363 220 A2

# Fig. 8

○ Circles indicate basic colors

**Fig. 9**

EP 1 363 220 A2

⌐ Color book Target Color Fineview

You can specify shipment destination and shipment date. In the case of multiple shipments, press the button and enter each shipment destination.

COLOR PLATE

502

500

501

⚠ Selected color may not be able to be accurately reproduced on CRT.

F-838

| TO POOL | BACK | SAMPLE INFORMATION |

| TO SELECTION OF SAMPLE BOOK COLOR CODE | TO SELECTION OF COLOR NAME OF COLOR BOOK | TO CYBER COLOR MACHING SYSTEM |

EP 1 363 220 A2

Fig. 10

This lists shows those colors currently pooled. You can go to other pages such as the sample information page by clicking on a color plate to select that plate.

1  F-0802

2  F-080?

3  COLOR PLATES 1

4  PRODUCT NO.: F-0802

POLYOLEFIN PL-Z
HEAT STABILITY: 5
LIGHT STABILITY: 5

5

6

7

DELETE SELECTED COLOR

To sample information

To detailed color display

Select this color

BACK

# Fig. 11

| SELECTION OF FINAL PRODUCT IMAGE |

CLICK ON THE BAG THAT MOST CLOSELY APPROXIMATES YOUR IMAGE

① ② ③

| FLAT SHOPPING BAG | | SHOPPING BAG WITH HANDLES | | BACK SACK TYPE SHOPPING BAG WITH TIE |

71 72 73

EP 1 363 220 A2

# Fig. 12

ORDER RECEIVING SYSTEM

CONTROL SECTION

ORDER RECEIVING
PROCESSING SECTION

DATABASE

ORDERING INFORMATION DATABASE
PRODUCTION INFORMATION DATABASE

PRODUCT ORDERING PROCESSING SECTION

EP 1 363 220 A2

**Fig. 13**

13: USER TERMINAL  11: COLOR DESIGNATING SERVER  14a: ORDER RECEIVING SYSTEM  14c: DISTRIBUTION SYSTEM  14d: ACCOUNTING SYSTEM

t1 COLOR AND PRODUCT SPECIFICATION

t2 REQUEST FOR INVENTORY AND PRICE INFORMATION FOR SPECIFIED COLOR AND PRODUCT

t3 RETURN OF INVENTORY AND PRICE INFORMATION

t4 JUDGMENT

t5 ORDER CONFIRMATION DISPLAY

t6 ORDER OKAYED

t7 TRANSMISSION OF ORDERING INFORMATION

t8 PROCESSING OF RECEIVED ORDER

t9 ORDER RECEPTION CONFIRMATION

t10 ORDER RECEPTION CONFIRMATION

t11 PROCESSING OF PRODUCT ORDER

t12 ORDERING OF PRODUCT

14b: PRODUCTION SYSTEM

t13 PRODUCTION OF PRODUCT

EP 1 363 220 A2